# EUROPÄISCHE PATENTSCHRIFT

(11) **EP 1 321 777 B1**
(45) Veröffentlichungstag und Bekanntmachung des Hinweises auf die Patenterteilung: **25.06.2008**
(21) Anmeldenummer: 02025267.2
(22) Anmeldetag: 13.11.2002
(51) Int. Cl.: G01S 17/89, G01C 15/00

(54) **Verfahren zur Aufnahme eines Objektraumes**
Method for the recording of an object space
Procédé de prise de vues d'un espace objet

(30) Priorität: 19.12.2001 AT 19862001
(43) Veröffentlichungstag der Anmeldung: 25.06.2003
(73) Patentinhaber: Riegl Laser Measurement Systems Gmbh, 3580 Horn (AT)
(72) Erfinder: Riegl, Johannes, 3754 (AT); Reichert, Rainer, 3580 Horn (AT); Studnicka, Nikolaus, 1190 WIen (AT); Ullrich, Andreas, 3003 Gablitz (AT)
(74) Vertreter: Révy von Belvárd, Peter

(56) Entgegenhaltungen:
- WO-A-01/77709
- WO-A-99/46614
- US-A- 5 638 164
- US-B1- 6 330 523

## Beschreibung

Die Erfindung bezieht sich auf ein Verfahren zur Aufnahme eines Objektraumes mit einem opto-elektronischen Entfernungsmesser nach einem Signal-Laufzeitverfahren mit einer Sendeeinrichtung zum Aussenden von optischen Signalen, insbesondere von Laser-Strahlung, und einer Empfangseinrichtung zum Empfangen von optischen Signalen, insbesondere von Laserstrahlung, die von im Zielraum befindlichen Objekten reflektiert wird, wobei sowohl der Sende- als auch der Empfangseinrichtung optische Systeme vorgeschaltet sind. Im besonderen weist der Entfernungsmesser eine Scan-Einrichtung zur Ablenkung der optischen Achsen von Sende- und Empfangseinrichtung in, vorzugsweise zwei, orthogonale Richtungen auf, wobei der Ablenkwinkel zwischen zwei aufeinanderfolgenden Entfernungsmessungen einstellbar und gegebenenfalls größer ist als der Strahldivergenzwinkel der ausgesandten optischen Strahlung. Der Entfernungsmesser umfaßt ferner eine Auswerteeinrichtung, die aus der Laufzeit bzw. der Phasenlage des ausgesandten optischen Signals Entfernungswerte ermittelt, wobei jedem Entfernungswert ein Raumwinkel zugeordnet ist. Bei der Aufnahme eines Objektraumes sind in diesem Referenz-Marken, z.B. Retro-Reflektoren, angeordnet, die entweder definierte geographische Koordinaten aufweisen und damit geeignet sind, die Aufnahmen in ein solches Koordinatensystem einzufügen oder bei mehreren Aufnahmen aus unterschiedlichen Richtungen geeignet sind, das Zusammenfügen dieser Aufnahmen, z.B. zur Erzeugung eines 3-D-Modelles zu unterstützen.

Wenn im Rahmen dieser Erfindung von einem Signal-Laufzeitverfahren die Rede ist, so soll dieser Ausdruck im weitesten Sinne verstanden werden. Denn die Laufzeit eines Signales läßt sich entweder durch Abzählen der verstreichenden Zeit von der Aussendung des optischen Signals bis zum Erhalt des reflektierten Strahles messen oder durch Vergleich der Phasenlage zwischen Sendestrahl und Empfangsstrahl. Beide Möglichkeiten sollen von der Erfindung erfaßt werden.

Da die als Referenzmarken dienenden Retro-Reflektoren typisch eine Größe von etwa 25 mm x 25 mm bis 100 mm x 100 mm aufweisen und moderne Entfernungsmesser bei einer Strahldivergenz kleiner 1 mrad, beispielsweise 0,3 mrad, Reichweiten von deutlich über 1000 m aufweisen, kann nicht mit Sicherheit davon ausgegangen werden, daß der Entfernungsmesser auch alle Referenzmarken erfaßt. Insbesondere bei einem weitgehend automatisch ablaufenden Meßprogramm kann dies zu Problemen führen und eine Wiederholung der Messung erforderlich machen. Da die Auswertung, insbesondere die Verknüpfung mehrerer Aufnahmen bzw. der zugehörigen Data-Files zu einem 3-D-Modell in der Regel off-line und nicht mehr im Feld erfolgt, kann dies einen beträchtlichen zusätzlichen Aufwand bedingen.

Es ist ein Ziel der Erfindung, bei Meß-Systemen der eingangs beschriebenen Art, zu gewährleisten, daß die Referenzmarken mit Sicherheit erfaßt werden. Grundsätzlich könnte man das Verhältnis von Strahldivergenz und Abtastrate so wählen, daß sich die Meß-Flecke zweier aufeinanderfolgender Messungen so weit überlappen, daß auch eine sehr weit entfernt positionierte Referenzmarke mit Sicherheit erfaßt wird. Dies würde jedoch eine sehr hohe Anzahl von Meßwerten und damit sehr lange Meßzeiten für den gesamten Objektraum bedeuten. So lange Meßzeiten sind aber vielfach nicht akzeptabel. Zum einen wenn es sich nicht um rein statische Objekte handelt, zum anderen wenn für die Dauer der Aufnahme andere Abläufe unterbrochen werden müssen, wie dies z.B. bei der Dokumentation von Verkehrsunfällen oder bei einem Einsatz im industriellen Bereich der Fall sein kann. Konkret sollen also die oben angeführten Ziele auch bei Einhaltung kurzer Meßzeiten erreicht werden.

Erfindungsgemäß wird dies dadurch erzielt, daß vor den oder im Anschluß an die Aufnahmen mit normaler Strahldivergenz solche mit vergrößerter Strahldivergenz durchgeführt werden, wobei gegebenenfalls in den Strahlengang des Senders und eventuell auch des Empfängers optische Elemente, vorzugsweise Linsensysteme, eingebracht werden, die den Strahldivergenzwinkel, beispielsweise um den Faktor 10 bis 20, vergrößern, so daß dieser mindestens dem für die Aufnahme gewählten Ablenkwinkel zwischen zwei aufeinanderfolgenden Messungen entspricht, wobei aus dieser Aufnahme mit vergrößerter Strahldivergenz die Koordinaten der Referenzmarken ermittelt werden und anschließend die Koordinaten für die Aufnahmen mit normaler Strahldivergenz verwendet werden.

Gemäß einem weiteren Merkmal der Erfindung werden zur Einstellung der Strahldivergenz des Senders und gegebenenfalls auch des Empfängers die diesen vorgeschalteten optischen Systeme in ihrer Brennweite und/oder Fokussierung verändert.

Vorteilhaft werden nach der Aufnahme mit vergrößerter Strahldivergenz in denjenigen Bereichen, in welchen Referenz-Marken ermittelt worden sind, Detail-Aufnahmen mit normaler Strahldivergenz durchgeführt, wobei gegebenenfalls das dem Sender vorgeschaltete optische System unter Nutzung des aus der Messung mit vergrößerter Strahldivergenz bekannten Entfernungswertes der Referenzmarke auf diese fokussiert wird. Die Abtastung erfolgt hierbei mit einer so weit erhöhten Auflösung, daß der Ablenkwinkel zwischen zwei aufeinanderfolgenden Entfernungsmessungen in etwa gleich oder kleiner ist als der Strahldivergenzwinkel und aus diesen Detailaufnahmen die Koordinaten der Referenzmarken mit hoher Genauigkeit, gegebenenfalls durch gewichtete Mittelung, ermittelbar sind.

Werden als Referenzmarken Retro-Reflektoren eingesetzt, so kann die Amplitude der Echosignale so hohe Werte erreichen, daß der Empfangskanal übersteuert wird. Dies kann zu einer Verfälschung des Entfernungsmeßwertes führen. Um dies zu vermeiden, wird gemäß einem weiteren Merkmal der Erfindung zur Begrenzung der Dynamik der Empfangssignale bei den Aufnahmen zur Ermittlung der Position der Referenzmarken die Sendeleistung, vorzugsweise durch Einführen eines optischen Dämpfungsgliedes, beispielsweise eines Graufilters, in den Strahlengang des Senders, reduziert.

Zusätzlich bzw. alternativ zu der oben angegebenen Lösung kann zur Begrenzung der Dynamik der Empfangssignale bei den Aufnahmen zur Ermittlung der Position der Referenzmarken die Leistung der Empfangssignale, vorzugsweise durch Einführen eines optischen Dämpfungsgliedes, beispielsweise eines Graufilters, in den Strahlengang des Empfängers, reduziert werden.

Erfindungsgemäß sind die optischen Dämpfungsmittel in ihrer Wirkung kontinuierlich variabel und bestehen beispielsweise aus kontinuierlich verstellbaren Aperturblenden und/ oder Graukeilen etc., die nach einer ersten Messung so verstellt werden, daß der Empfangskanal im optimalen Dynamikbereich betrieben wird.

Alternativ zu der oben beschriebenen Lösung sind die optischen Dämpfungsmittel in ihrer Wirkung stufenweise variabel und bestehen beispielsweise aus Lochblenden und/oder Stufen-Graufiltern etc., die nach einer ersten Messung so verstellt werden, daß der Empfangskanal im optimalen Dynamikbereich betrieben wird.

Werden als Referenzmarken Retro-Reflektoren eingesetzt, so kann gemäß einer vorteilhaften Weiterbildung der Erfindung ein zweiter oder auch noch weitere Empfangskanäle mit reduzierter Empfindlichkeit vorgesehen werden, die bei der Messung der retro-reflektierenden Referenzmarken zur Entfernungsmessung herangezogen werden. Sämtliche Empfangssignale aller dieser Empfangskanäle werden hierbei gleichzeitig in einer mehrkanaligen Zeitmeßeinrichtung ausgewertet. Damit wird in einer einzigen Scan-Aufnahme der gesamte Dynamikbereich mit höchstmöglicher Genauigkeit erfaßt.

Weitere Merkmale der Erfindung ergeben sich aus der nachfolgenden Beschreibung eines Ausführungsbeispieles und unter Bezugnahme auf die Zeichnung.
- Fig. 1: zeigt eine Anordnung zum Vermessen eines Objektes, und in den
- Fig. 2: und 3 sind schematisch die Abtaststrahlen in verschiedenen Betriebsarten gezeigt;
- Fig. 4: zeigt schematisch und schaubildlich den Messkopf der Einrichtung zur Durchführung des Verfahrens; und
- Fig. 5: veranschaulicht schließlich ein Blockschaltbild der Einrichtung.

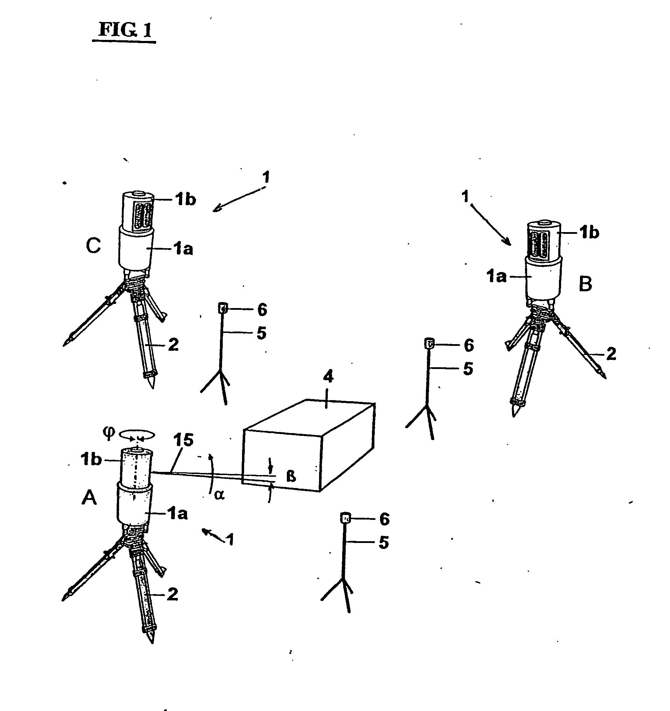

Die Fig.1 zeigt die Anordnung zur Aufnahme eines schematisch angedeuteten Objektes 4 mit dem Ziel, ein 3-D-Modell desselben zu erstellen. Ein Laserscanner 1 wird zunächst mit seinem Stativ 2 in einer ersten Position A aufgestellt und auf das Objekt 4 ausgerichtet. Um das Objekt 4 werden eine Reihe von Retro-Reflektoren 6 positioniert, die jeweils auf Stativen 5 angeordnet sind. Obwohl Retro-Reflektoren bevorzugt sind, können auch andere Referenzmarken benutzt werden, beispielsweise färbige und/oder mit Markierungen versehene Tafeln oder Lichtquellen. Statt der (bevorzugten) Verwendung ließen sich auch andere bündelungsfähige Lichtquellen einsetzen.

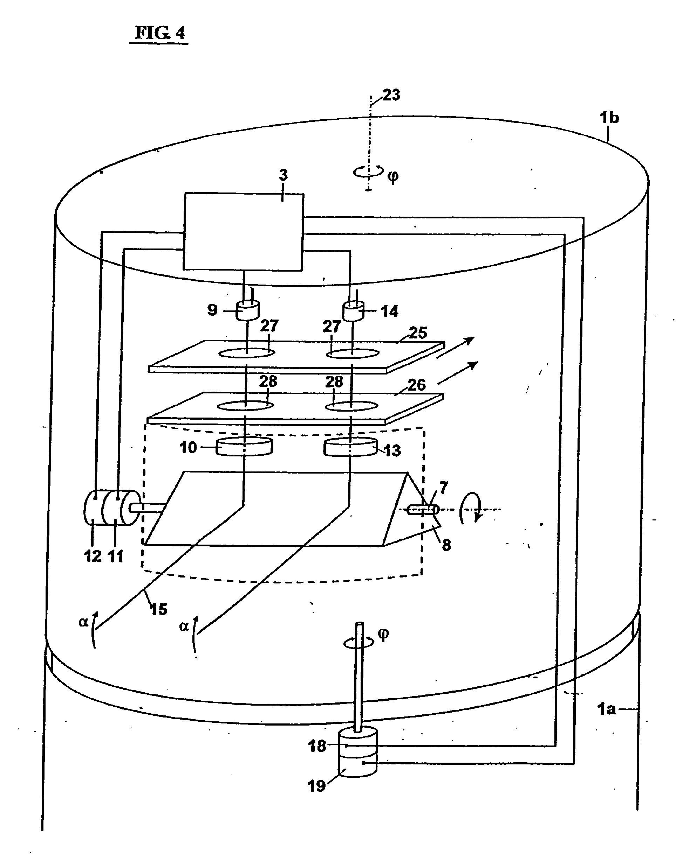

Der Laserscanner 1 umfaßt einen Meßkopfunterteil 1a, der am Stativ 2 befestigt ist. Im Meßkopfunterteil ist, wie weiter unten im Detail erläutert werden wird, ein Antrieb (Motor 18 in Fig. 4) für den Meßkopfoberteil 1b vorgesehen, der diesen um eine vertikale Achse (23 in Fig. 4) entsprechend den Pfeilen ϕ hin- und her schwenkt. Der Meßkopfoberteil 1b enthält das Laser-Entfernungsmeß-System zumindest mit einem Teil der Auswerteeinrichtung und ein rotierendes Spiegelprisma, welches den Meß-Strahl 15 mit einer bestimmten, und wie später noch erlätert wird verstellbaren, Strahlendivergenz eines Winkels β um eine horizontale Achse entsprechend dem Pfeil α verschwenkt.

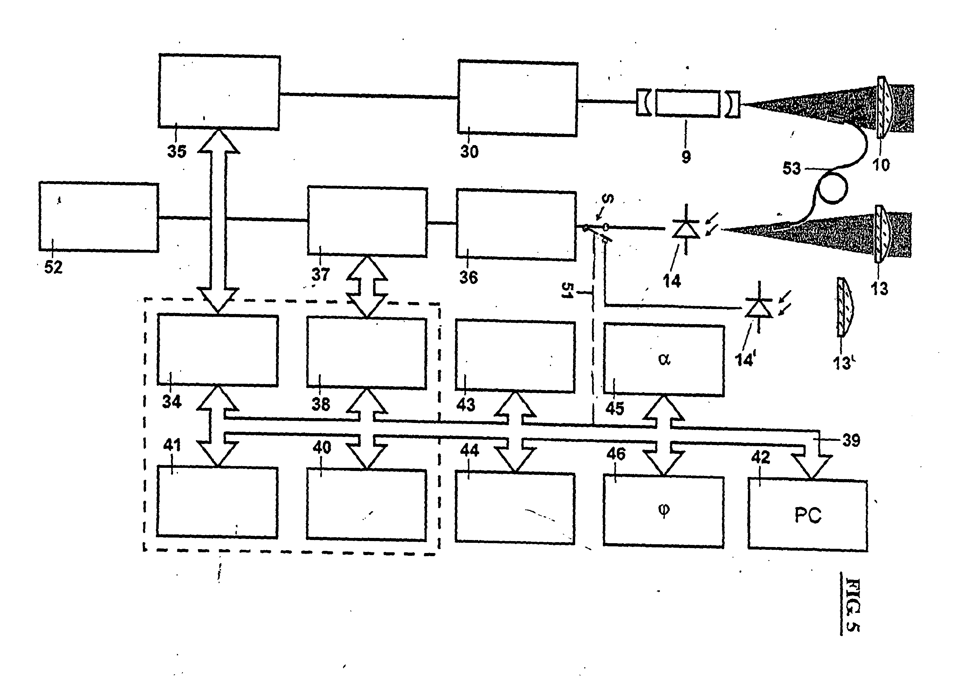

Durch den Laserscanner wird somit der gesamte Objektraum mit dem Objekt 4 und den als Referenzmarken dienenden Retro-Reflektoren 6 aufgenommen und ein entsprechender Datafile in dem Speicher eines Computers abgelegt (vgl. Beschreibung zu Fig. 5). Nach der ersten Aufnahme vom Standort A aus wird der Laserscanner 1 auf den Standort B transferiert, die Retro-Reflektoren 6 verbleiben aber in der gleichen Position. Der Laserscanner 1 wird wieder auf das Objekt 4 ausgerichtet und eine weitere Aufnahme durchgeführt. Um eine möglichst exakte Dokumentation sämtlicher Ansichten des Objektes zu erhalten, kann der Laserscanner noch in weitere Aufnahmepositionen gebracht werden (z.B. Position C). Im Rahmen der Erfindung wäre es aber auch denkbar, aus den Positionen Ab und allenfalls C gleichzeitig Aufnahmen des Objektes 4 bzw. des Objektraumes vorzunehmen, doch erhöht sich dadurch selbstverständlich der apparative Aufwand.

Die aus den verschiedenen Standorten gewonnenen Datafiles werden anschließend zu einem 3-D-Modell verknüpft, wobei Referenzmarken zur Deckung gebracht werden. Die Referenzmarken können Kennungen aufweisen, so daß der Rechner in der Lage ist, diese automatisch zu identifizieren und bei der Auswertung zur Deckung zu bringen, andernfalls kann eine Unterstützung durch den Bedienenden erforderlich sein. Sind die Koordinaten der Referenzmarken in einem beliebigen Koordinatensystem definiert, so kann das Objekt in diesem Koordinatensystem positioniert werden. Das 3-D-Modell des Objektes kann in beliebigen Ansichten dargestellt und mit geeigneten CAD-Programmen weiter bearbeitet werden.

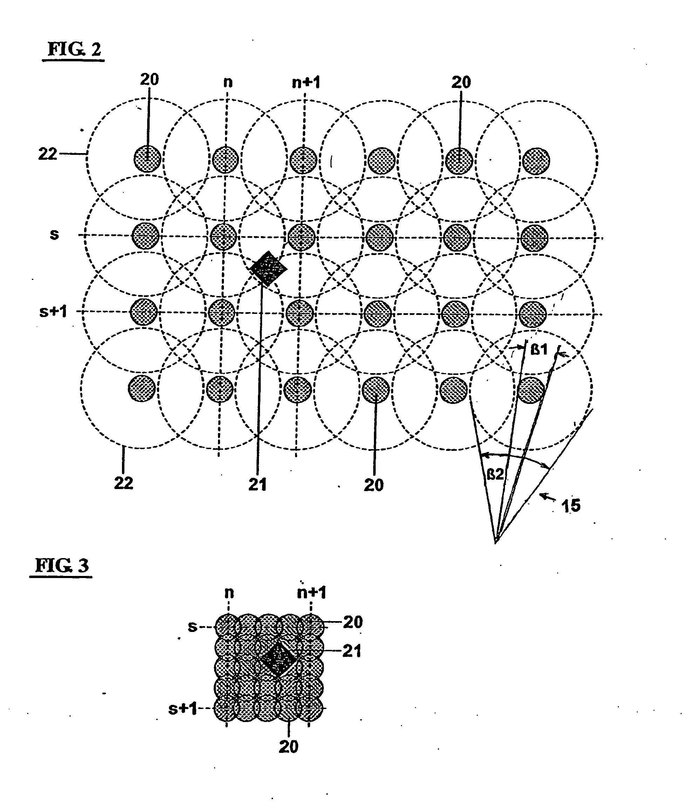

In den Figuren 2 und 3 ist ein kleiner Ausschnitt des Abtastrasters des Laserscanners dargestellt, wobei die Verteilung der Meßwerte nicht streng regelmäßig sein muß. Das Objektfeld wird durch den Laserscanner mit einem Meß-Strahl abgetastet, der einen Divergenzwinkel β von etwa 0,3 mrad aufweist. In den Fig. 2 und 3 sind die entsprechenden Meßflecke mit 20 bezeichnet, die einem ersten Divergenzwinkel β1 entsprechen. In dem dargestellten Beispiel verschwenkt die Scan-Einrichtung den Meß-Strahl zwischen zwei Messungen um etwa 1 mrad. Die Wahl dieser Scan-Rate stellt einen Kompromiß zwischen Auflösung und Meß-Zeit dar. An sich wäre es erwünscht, die Scan-Rate so klein zu wählen, daß sich die Meß-Flecke stets ausreichend überlappen. Auf der anderen Seite führen diese geringen Scan-Raten zu außerordentlich langen Meß-Zeiten, die speziell dann, wenn es sich um große Scanbereiche oder um nicht um rein statische Objekte handelt, nicht akzeptabel sind.

Ein Verhältnis von Scan-Rate und Strahl-Divergenz β, wie sie der Fig. 2 zugrunde liegt, stellt hinsichtlich der Auflösung normaler Objekte im allgemeinen kein Problem dar, bei den Referenzmarken kann es allerdings zu Schwierigkeiten kommen. Die in der Regel als Referenzmarken eingesetzten Retro-Reflektoren 6 weisen typische Abmessungen von ca. 50 mm x 50 mm bis 100 mm x 100 mm auf. Bei Reichweiten moderner Laserscanner, die bei 1 km und deutlich darüber liegen, erscheinen diese Objekte unter einem so kleinen Winkel, daß die Wahrscheinlichkeit, daß die Meß-Strahlen die Reflektoren nicht erfassen, sehr groß ist. In Fig. 2 ist ein solcher Fall dargestellt: der Reflektor 21 liegt in dem Feld (n, n+1; s, s+1), d.h. in Richtung der vertikalen Koordinaten α und er horizontalen Koordinaten ϕ, zwischen den Meß-Flecken und wird daher vom Gerät nicht erkannt.

Um dies zu vermeiden, wird der Laser-Scanner erfindungsgemäß auf einen zweiten Meß-Modus umgeschaltet, in welchem die Divergenz des Meß-Strahles zu einem Winkel β2 annähernd um den Faktor 5 vergrößert ist, die entsprechenden Meß-Flecke sind in der Zeichnung mit 22 bezeichnet. Diese Strahl-Aufweitung kann durch Einschaltung einer Optik in den Strahlengang des Laser-Senders erfolgen und wird weiter unten an Hand der Fig. 4 näher erläutert. Es kann aber auch (gegebenenfalls zusätzlich dazu) durch ein optisches System an Stelle einer einschieb- oder einschwenkbaren Linse vorhanden sein, dessen Strahlendivergenz durch Verstellen eines Gliedes entlang der optischen Achse zur Veränderung der Brennweite und/oder des Fokus verschoben wird.

Durch die Strahl-Aufweitung wird auch die auf die Flächeneinheit auftreffende Energie stark vermindert, so daß bei vielen Objekten die rückgestrahlte Energie nicht mehr für eine Auswertung ausreicht. Die Retro-Reflektoren weisen jedoch einen so hohen Reflexionsgrad auf, daß auch bei einer Aufstellung der Referenzmarken in großer Distanz das reflektierte Signal eine, für eine sichere Messung völlig ausreichende Amplitude aufweist. Im Gegenteil: vielfach sind, wie später erläutert werden wird, zusätzliche Maßnahmen erforderlich, um eine Übersteuerung der Empfangseinrichtung durch die großen Amplituden der von den Retro-Reflektoren rückgestrahlten Signale zu vermeiden. Da sich in diesem Meß-Modus mit großer Strahl-Divergenz die einzelnen Meß-Flecke überlappen, werden die Referenzmarken mit Sicherheit erkannt. Dieser Modus wird ausschließlich dazu benutzt, die im Objektfeld positionierten Referenzmarken zu identifizieren, alle anderen Objekte, die wesentlich leistungsschwächere Signale liefern, werden hingegen unterdrückt. Allerdings ist die Genauigkeit, mit der die Positionen der Referenzmarken ermittelt werden, nicht besonders hoch.

Da aber die Genauigkeit mit der ein 3-D-Modell in ein übergeordnetes Koordinatensystem eingebettet werden kann, primär von der exakten Definition der Positionen der Referenzmarken bestimmt wird, werden nach einem weiteren Merkmal der Erfindung in einem dritten Meß-Modus jene Teilbereiche des Objektfeldes mit geringer Abtastrate und damit hoher räumlicher Auflösung gescannt, in welchen im zweiten Modus eine Referenzmarke ermittelt worden ist. Die Fig. 3 veranschaulicht dies für die in dem Feld (n, n+1; s, s+1) gemessene Referenzmarke 21. In dem dritten Modus wird wieder die ursprüngliche Strahldivergenz, in diesem Beispiel von 0,3 mrad gewählt, allerdings wird mit der geringen Scannrate nur in dem Bereich zwischen n und n+1 gemessen, während die Bereiche zwischen den Referenzmarken mit hoher Geschwindigkeit überstrichen werden. Die Scan-Rate bzw. die Winkelschrittweite wird so gewählt, daß sich die Meß-Flecke überlappen. In diesem Modus können die Positionen der Referenzpunkte mit hoher Genauigkeit ermittelt werden. Diese werden bei der Auswertung der Ergebnisse des Meß-Modus 1 verwendet.

Einzelheiten des erfindungsgemäßen Prinzips werden an Hand der Fig. 4 näher erläutert. Am Meßkopfunterteil 1a, der am Stativ 2 befestigt ist, ist der Meßkopfoberteil 1b um eine vertikale Achse 23 schwenkbar gelagert. Angetrieben wird der Meßkopfoberteil 1b hierbei durch einen Motor 18. Ein auf derselben Achse angeordneter Winkeldecoder 19 meldet die jeweilige Winkelstellung ϕ des Meßkopfes 1 (Fig. 1) an eine Auswerteeinrichtung 3 zurück. Der Meßkopfoberteil 1b umfaßt den Laser-Entfemungsmesser und ein Spiegelprisma 8, das um eine horizontale Achse 24 drehbar ist. An Stelle eines Spiegelprismas können natürlich auch andere Methoden zum Abtasten eines Objektfeldes eingesetzt werden, wie Kippspiegel oder eine elektronische Abtastung. Angetrieben wird das Spiegelprisma von einem Motor 11, auf dessen Welle ein Winkeldecoder 12 angeordnet ist. Gesteuert wird der Antrieb des Spiegelprismas 8 von der Auswerteeinrichtung 3, die auch die Signale des Winkeldecoders 12 verarbeitet. Wenn hier auch ein einziges Prisma 8 für Sende- und Empfangsstrahl vorgesehen ist, so versteht es sich, daß alternativ für jeden Kanal ein gesondertes Abtastsystem vorgesehen sein könnte, wobei jedoch diese Systeme miteinander synchronisiert werden müßten, was einen zusätzlichen Aufwand bedeutet.

Die Auswerteeinrichtung umfaßt auch die Elektronik des Entfernungsmessers und steuert einen Laser 9 an. Dieser kann aus einer Laserdiode bestehen oder auch aus einem Festkörper- oder Gas-Laser, vorteilhaft aus einem dioden-gepumpten güte-geschalteten Festkörperlaser. Mit 10 ist eine Optik bezeichnet, die im allgemeinen so justiert ist, daß sie die Laser-Quelle ins Unendliche abbildet. Durch das rotierende Spiegelprisma 8 wird der Meß-Strahl 15 in Richtung des Pfeiles α abgelenkt. Parallel zum Sendekanal 9,10 ist ein Empfangskanal vorgesehen, der eine Optik 13 und eine Empfangsdiode 14 aufweist. Die optische Achse des Empfangskanales wird durch das Spiegelprisma 8 parallel zum Meß-Strahl 15 abgelenkt. Zwischen dem Laser 9 und der Optik 10 bzw. zwischen der Empfängerdiode 14 und der Optik 13 sind zwei in einer horizontalen Ebene verschiebbare Schlitten 25 und 26 angeordnet. Der erstere, 25, enthält zwei Linsensysteme 27, mit welchen einerseits der Meß-Strahl aufgeweitet, andererseits das Meßfeld des Empfangskanales entsprechend vergrößert wird. Im zweiten Schlitten 26 sind Graufilter 28 vorgesehen, mit hen, mit welchen, einerseits die Sendeleistung reduziert, andererseits die Amplitude des Empfangssignales bedämpft werden kann. Die beiden Schlitten werden entweder manuell oder (bevorzugt) durch nicht dargestellte Antriebe in den Strahlengang von Sender und Empfänger eingefahren bzw. aus diesem zurückgezogen. Gesteuert werden die Antriebe der beiden Schlitten durch die Auswerteeinrichtung 3. An sich ist im Rahmen der Erfindung auch eine umgekehrte Anordnung möglich, indem zur Veränderung des Winkels β im ersten Verfahrensschritt die Strahlendivergenz durch eine negative Linse verringert und dann durch Entfernen der Linse vergrößert wird. Auch wurde bereits gesagt, daß das System 27 ständig im Strahlengang verbleiben kann, wenn mindestens eine entlang der optischen Achse verstellbare Linse zur Veränderung der Brennweite und/oder des Fokus vorgesehen wird. In jedem Falle aber benötigt man ein bewegliches optisches System.

Die Fig. 5 zeigt in Form eines Blockdiagramms schematisch den Aufbau des Steuergerätes 3 des Laser-Scanners gemäß der Erfindung, wobei in diesem Diagramm nur die den Ablenkeinheiten nachgeschalteten Systeme dargestellt sind. Der Laser-Transmitter 35 dieser Anlage arbeitet mit einem passiv-gütegeschaltetem Festkörperlaser 9, der durch Dioden 30 gepumpt wird. Im Gegensatz zu bekannten Laserentfernungsmessern, die mit Laserdioden arbeiten, kann der Festkörper-Laser 9 nicht durch den Prozessor 34 synchronisiert werden, sondern ist freilaufend. Es ist daher notwendig, dem Empfänger 140 neben den Echo-Impulsen auch die Sendeimpulse zuzuführen. Dies kann vorteilhaft mittels eines im Strahlengang des Festkörperlasers 9 eingebrachten Lichtleiters 53 erfolgen. Das aus dem Sende-Strahlengang abgezweigte Laser-Licht wird über den Lichtleiter 53 direkt dem Empfänger 14 zugeleitet. Alternative Lösungsansätze basieren auf eigenen separaten Empfängern zur Erzeugung eines elektrischen Pulses für die Laufzeitmessung.

Neben der Sendeoptik 10 ist eine Empfängeroptik 13 vorgesehen, deren optische Achse parallel zu der der Sendeoptik 10 ausgerichtet ist. Die Empfängeroptik 13 konzentriert die von einem im Strahlengang der Sendeoptik befindlichem Ziel im allgemeinen diffus reflektierte Strahlung auf die Empfangsdiode 14. Mit Vorteil wird als Empfangsdiode 14 eine Avalanche-Diode eingesetzt. Vorzugsweise sind Sendelaser und Empfangsdiode in ihrer spektralen Charakteristik aufeinander abgestimmt, wobei die Empfangsdiode ihre maximale spektrale Empfindlichkeit in demjenigen Bereich aufweist, in welchem der Sendelaser maximal emittiert. Da die Empfangsdiode 14 aber neben der von dem Sendelaser emittierten und vom Ziel reflektierten Strahlung viel Störstrahlung in Form von Tageslicht oder Licht von den verschiedensten Kunstlichtquellen empfängt, kann es vorteilhaft sein, der Empfangsdiode ein möglichst schmalbandiges, optisches Filter vorzusetzen, welches seine maximale Transmission in dem Spektralband aufweist, in welchem der Laser 9 emittiert.

In dem mehrzielfähigen Empfangskanal, der von einem Clock-Generator 52 gesteuert wird und aus einer Verstärker- und Analogsignalprozessorstufe 36 und einem Analog-/Digitalwandler 37 besteht, werden der Sendeimpuls und der Echo-Impuls bzw. die Echo-Impulse digitalisiert und weiter verarbeitet. Unter Berücksichtigung der konstanten Laufzeit des Referenz-Sendeimpulses im Lichtleiter 53 wird aus der Zeitdifferenz zwischen dem Eintreffen des Sendeimpulses und des Echo-Impulses die Entfernung des jeweiligen Objektes ermittelt. Dies ist natürlich nur ein Beispiel, denn es wäre ebenso denkbar, eine digitale Prozessorstufe zu verwenden und daher einen A/D-Wandler dieser vorzuschalten. Ebenso wäre es denkbar, die gesamte Auswertung analog vorzunehmen.

Getaktet wird die gesamte Einrichtung durch einen Clock-Generator 52. Der Prozessor 34 und der Datenspeicher 38 sind durch einen Datenbus miteinander verbunden, der schematisch angedeutet und mit 39 bezeichnet ist. An diesen Datenbus 39 sind ferner ein Programmspeicher 40 für den Prozessor 34 angeschlossen, sowie ein Datenzwischenspeicher 41, in welchen nach einer ersten Auswertung durch den Prozessor 34 Rohdaten abgelegt werden, die am Ende des Meßzyklus ausgelesen werden. Aus diesen Rohdaten wird mit im Programmspeicher abgelegten Algorithmen ein Entfernungswert für jedes einzelne Rasterelement (Pixel) ermittelt.

Zusätzlich zum oben beschriebenen Empfangskanal 13, 14 kann im Rahmen der Erfindung (mindestens) ein weiterer, kolinearer Empfangskanal 13', 14' verringerter Empfindlichkeit vorgesehen werden. Dieser kann beispielsweise mittels eines lediglich symbolisch dargestellten Schalters S an Stelle des ersten Empfangskanales 13, 14 eingeschaltet werden. Dieser zweite Empfangskanal 13', 14' mag im oben beschriebenen zweiten Meßschritt zur Bestimmung der Entfernung bzw. der Koordinaten der Referenzmarken 6 eingesetzt werden. Zu diesem Zwecke kann der Schalter S über den Bus 39 und eine strichliert angedeutete Verbindung 51 betätigt werden.

Die Steuerung des Antriebes des Spiegelprismas 8 erfolgt durch die Einheit 45, die des Meßkopfantriebes durch die Einheit 46. Durch den Prozessor 34 werden die aus den drei verschiedenen Meß-Modi bestehenden Sequenzen gesteuert. Die dazu notwendige Strahlaufweitung und Signaldämpfung wird über die Einheit 44 ausgelöst, welche die Antriebe für die Schlitten 25 und 26 mit den optischen Systemen bzw. Graufilter steuert. Die insbesondere für den Modus 3 erforderliche Variation der Scan-Rate wird ebenfalls durch den Prozessor 34 ausgelöst, wobei die Einheit 46 entsprechend angesteuert wird.

Die Datafiles der verschiedenen Scan-Aufnahmen, die jeweils aus einer Mode 1- und Mode 3- Aufnahme bestehen sowie pro Rasterelement einem Datensatz bestehend aus den beiden Winkelkoordinaten α und ϕ, einen Entfernungswert und gegebenenfalls noch weiteren Daten wie der Signal-Amplitude, Signalbreite und -form etc., werden in einem Speicher 43 abgelegt.

Die weitere Verarbeitung mehrerer Scan-Aufnahmen zur Erzeugung eines 3-D-Models des Zielraumes erfolgt in einem Rechner 42. Diese Verarbeitung erfolgt in der Regel off-line. Hierbei werden die bei den einzelnen Scan-Aufnahmen gewonnen Data-Files ("Punkt-Wolken" oder "cluster") im Rechner 42 miteinander verschmolzen, wobei die Referenzmarken zur Deckung gebracht werden. Das Ergebnis ist ein 3-D-Modell, das als ein Data-File zur Verfügung steht und beispielsweise mit Konstruktions-, Geodäsie-, Architektur- oder ähnlichen Computerprogrammen weiter bearbeitet werden kann.

## Patentansprüche

1. Verfahren zur Aufnahme eines Objektraumes mit einem opto-elektronischen Entfernungsmesser nach einem Signal-Laufzeitverfahren mit einer Sendeeinrichtung zum Aussenden von optischen Signalen und einer Empfangseinrichtung zum Empfangen von optischen Signalen die von im Zielraum befindlichen Objekten reflektiert werden, wobei sowohl der Sende- als auch der Empfangseinrichtung optische Systeme vorgeschaltet sind, ferner mit einer Scan-Einrichtung zur Ablenkung der optischen Achsen von Sende- und Empfangseinrichtung in, vorzugsweise zwei orthogonale, Richtungen, wobei der Ablenkwinkel zwischen zwei aufeinanderfolgenden Entfernungsmessungen einstellbar und gegebenenfalls größer ist als der Strahldivergenzwinkel der ausgesandten optischen Strahlung, ferner mit einer Auswerteeinrichtung, die aus der Laufzeit bzw. der Phasenlage des ausgesandten optischen Signals Entfernungswerte ermittelt und jedem Entfernungswert ein Raumwinkel zugeordnet ist, wobei im Objektraum Referenz-Marken angeordnet sind, die entweder definierte geographische Koordinaten aufweisen und damit geeignet sind, die Aufnahmen in ein solches Koordinatensystem einzufügen oder bei mehreren Aufnahmen aus unterschiedlichen Richtungen geeignet sind, das Zusammenfügen dieser Aufnahmen zu unterstützen,
**dadurch gekennzeichnet, dass**
vor den oder im Anschluss an die Aufnahmen mit normaler Strahldivergenz (20) solche mit so stark vergrößerter Strahldivergenz (22) durchgeführt werden, dass diese mindestens dem für die Aufnahme gewählten Ablenkwinkel zwischen zwei aufeinanderfolgenden Messungen entspricht, wobei aus dieser Aufnahme mit vergrößerter Strahldivergenz die Koordinaten der Referenzmarken ermittelt werden und anschließend die Koordinaten für die Aufnahmen mit normaler Strahldivergenz verwendet werden.

2. Verfahren nach Anspruch 1, **dadurch gekennzeichnet, dass** zur Einstellung der Strahldivergenz des Senders (9), und gegebenenfalls auch des Empfängers (14), die diesen vorgeschalteten optischen Systeme (10 bzw. 13) in ihrer Brennweite und/oder Fokussierung verändert werden.

3. Verfahren nach Anspruch 1 oder 2, **dadurch gekennzeichnet, dass** nach der Aufnahme mit vergrößerter Strahldivergenz in den Bereichen, in welchen Referenz-Marken (6) ermittelt worden sind, Detail-Aufnahmen mit normaler Strahldivergenz (20) durchgeführt werden, wobei gegebenenfalls das dem Sender (9) vorgeschaltete optische System (10) unter Nutzung des aus der Messung mit vergrößerter Strahldivergenz bekannten Entfernungswertes der Referenzmarke (6) auf diese fokussiert wird, wobei die Abtastung mit einer so weit erhöhten Auflösung erfolgt, dass der Ablenkwinkel zwischen zwei aufeinanderfolgenden Entfernungsmessungen in etwa gleich oder kleiner ist als der Strahldivergenzwinkel, so dass aus diesen Detailaufnahmen die Koordinaten der Referenzmarken (6) mit hoher Genauigkeit ermittelbar sind (Fig.3).

4. Verfahren nach einem der Ansprüche 1 bis 3, bei welchem Retro-Reflektoren als Referenzmarken eingesetzt werden, **dadurch gekennzeichnet, daß** zur Begrenzung der Dynamik der Empfangssignale bei den Aufnahmen zur Ermittlung der Position der Referenzmarken (6) die Sendeleistung oder die der Empfangssignale reduziert wird.

5. Verfahren nach einem der vorhergehenden Ansprüche, **dadurch gekennzeichnet, dass** wenigstens eines der folgenden Merkmale erfüllt ist:
(a) die Sendeeinrichtung ist zum Aussenden von Laser-Strahlung ausgebildet;
(b) als Referenz-Marken werden Retro-Reflektoren verwendet;
(c) das Zusammenfügen der Aufnahmen erfolgt zur Erzeugung eines 3-D-Modelles;
(d) in den Strahlengang (15) des Senders (9) und eventuell auch des Empfängers (14) werden optische Elemente, vorzugsweise Linsensysteme (27) eingebracht, die den Strahldivergenzwinkel, beispielsweise um den Faktor 10 bis 20, vergrößern;
(e) die Ermittlung der Koordinaten der Referenzmarken (6) erfolgt durch gewichtete Mittelung;
(f) die Reduktion der Sendeleistung erfolgt durch Einführen eines optischen Dämpfungsgliedes, beispielsweise eines Graufilters (28), in den Strahlengang des Senders (9) oder des Empfängers (14), wobei vorzugsweise die optischen Dämpfungsmittel in ihrer Wirkung kontinuierlich variabel sind, und beispielsweise aus kontinuierlich verstellbaren Aperturblenden und/oder Graukeilen etc. bestehen, oder dass sie in ihrer Wirkung stufenweise variabel sind und beispielsweise aus Lochblenden und/oder Stufen-Graufiltern etc. bestehen, und dass diese Dämpfungsmittel nach einer ersten Messung so verstellt werden, daß der Empfangskanal im optimalen Dynamikbereich betrieben wird.

6. Verfahren nach einem der vorhergehenden Patenansprüche, bei welchem Retro-Reflektoren als Referenzmarken eingesetzt werden, **dadurch gekennzeichnet, daß** ein zweiter oder weitere kolineare Empfangskanäle (13', 14') mit reduzierter Empfindlichkeit vorgesehen sind und bei der Messung der retro-reflektierenden Referenzmarken (6) einer der unempfindlichen Empfangskanäle zur Entfernungsmessung herangezogen wird.

7. Vorrichtung zur Durchführung des Verfahrens nach einem der vorhergehenden Ansprüche, mit einer Sendeeinrichtung zum Aussenden von optischen Signalen und einer Empfangseinrichtung zum Empfangen von optischen Signalen die von im Zielraum befindlichen Objekten reflektiert wird, wobei sowohl der Sende- als auch der Empfangseinrichtung optische Systeme (10, 13, 27, 28) vorgeschaltet sind, ferner mit einer Scan-Einrichtung zur Ablenkung der optischen Achsen von Sende- und Empfangseinrichtung in, vorzugsweise zwei orthogonale, Richtungen, wobei der Ablenkwinkel (α, ϕ) zwischen zwei aufeinanderfolgenden Entfernungsmessungen einstellbar, durch zugeordnete Winkeldekoder bestimmt und gegebenenfalls größer ist als der Strahldivergenzwinkel der ausgesandten optischen Strahlung, ferner mit einer Auswerteeinrichtung (3), die aus der Laufzeit bzw. der Phasenlage des ausgesandten optischen Signals Entfernungswerte ermittelt und jedem Entfernungswert ein vom Winkeldekoder bestimmter Raumwinkel (α, ϕ) zugeordnet ist, **dadurch gekennzeichnet, dass** wenigstens das optische System (10) der Sendeeinrichtung (9) eine Einrichtung (27) zum Verändern der Strahldivergenz, vorzugsweise zum Vergrößern um mindestens einen Faktor von 5, beispielsweise um den Faktor 10 bis 20, aufweist, die durch die Auswerteeinrichtung (3) für Aufnahmen mit normaler Strahldivergenz (20) und solche mit vergrößerter Strahldivergenz (22) steuerbar ist.

8. Vorrichtung nach Anspruch 7, **dadurch gekennzeichnet, dass** zur Begrenzung der Dynamik der Empfangssignale eine Einrichtung zur Reduktion der Sendeleistung oder der Leistung der Empfangssignale, vorzugsweise durch Einführen eines optischen Dämpfungsgliedes, beispielsweise eines Graufilters (28), in den Strahlengang des Senders (9) oder des Empfängers (14) vorgesehen ist,
und dass vorzugsweise
das optische Dämpfungsglied (28) in seiner Wirkung kontinuierlich variabel ist, und beispielsweise aus einer kontinuierlich verstellbaren Aperturblende und/oder einem Graukeil etc. besteht, oder dass es in seiner Wirkung stufenweise variabel ist und beispielsweise aus einer Lochblende und/oder Stufen-Graufiltern etc. besteht.

9. Vorrichtung nach Anspruch 7 oder 8, **dadurch gekennzeichnet, dass** die Sendeeinrichtung (9) zum Aussenden von Laser-Strahlung ausgebildet ist.

10. Vorrichtung nach einem der Ansprüche 7 bis 9, **dadurch gekennzeichnet, dass** zusätzlich zum Empfangskanal (9, 14) noch mindestens ein zweiter kolinearer Empfangskanal (13', 14') mit reduzierter Empfindlichkeit vorgesehen ist, so dass die Vorrichtung mindestens zwei Empfangskanäle (9, 14; 13', 14') unterschiedlicher Empfindlichkeit enthält.

## Claims

1. Method for recording an object space, comprising an opto-electronical range finder using the signal time-of-flight of signal procedure and including transmitter means for transmitting optical signals, and receiver means for receiving optical signals which are reflected by objects in a target space, optical systems being pre-poned both the transmitter means and the receiver means, comprising further scanning means for deviating the optical axes of said transmitter means and said receiver means, preferably into two orthogonal directions, the deviation angle between two successive distance measurements being adjustable and being optionally larger than the divergence angle of the beam of the transmitted rays, furthermore comprising evaluation means which determine distance values from the time-of-flight or from the phase relationship of the transmitted optical signals, a spatial angle being assigned to each distance value, wherein reference marks are arranged in said object space which either have defined geographical co-ordinates, thus being adapted to insert the recordings into such a co-ordinate system or, in the case of a plurality of recordings from different directions, are adapted to aid in assembling these recordings,
**characterised in that**
before or subsequently to the recordings using a normal divergence of beam (20), such ones are carried out using such an enlarged divergence of beam (22) that it corresponds at least to the deviation angle selected for the recording between two successive measurements, wherein the co-ordinates of said reference marks are determined from these recording using an enlarged divergence of beam, and subsequently these co-ordinates are used for the recordings using a normal divergence of beam.

2. Method according to claim 1, **characterised in that**, for adjusting the divergence of beam of said transmitter (9), and optionally also that of said receiver (14), said pre-poned optical systems (10 or 13) are altered either with respect to the focal length and/or by focusing.

3. Method according to claim 1 or 2, **characterised in that** having made a recording using an enlarged divergence of beam in those regions where reference marks (6) have been determined, detail recordings are made using a normal divergence of beam (20), wherein the optical system (10) pre-poned to said transmitter (9) is optionally focused onto them using the distance value of a reference mark (6), which is known from the measurement using an enlarged divergence of beam, wherein scanning is carried out with a resolution increased in such a manner that the deviation angle between two successive distance measurements is about equal to or smaller than the divergence angle of the beam so that the co-ordinates of said reference marks (6) may be determined with a high precision from these detail recordings (Fig. 3).

4. Method according to any of claims 1 to 3, wherein retro-reflectors are used as reference marks, **characterised in that** for delimiting the dynamics of the received signals during the recordings for determining the position of the reference marks (6), the transmitter power or the power of the received signals is reduced.

5. Method according to any of the preceding claims, **characterised in that** at least one of the following characteristics is fulfilled:
a) the transmitter means are designed to transmit laser beams;
b) retro-reflectors are used as reference marks;
c) assembling the recordings is done so as to obtain a 3-D model;
d) optical elements, preferably a lens system (27), are inserted into the path of rays (15) of said transmitter means (9), and optionally also into that of said receiver means (14), which enlarge said divergence angle of the beam, for example by a factor of 10 to 20;
e) determining the co-ordinates of said reference marks (6) is carried out by weighted middling;
f) the reduction of the transmitter power is carried out by inserting an optical damping member, for example of a grey filter (28), into the path of rays of said transmitter (9) or of said receiver (14), wherein the effect of the optical damping means is preferably continuously variable and consists, for example, of continuously adjustable aperture diaphragms or grey wedges etc., or that their effect is variable in steps and they consist, for example, of hole diaphragms and/or of stepped grey wedges, and that these damping means, after a first measurement, are adjusted in such a manner that the receiver channel is operated within an optimum dynamic range.

6. Method according to any of the preceding claims, wherein retro-reflectors are used as reference marks, **characterised in that** a second or further co-linear receiver channels (13', 14') of a reduced sensitivity are provided, and when measuring the retro-reflective reference marks (6) one of the insensitive receiver channels is used for range finding.

7. Device for carrying out the method according to any of the preceding claims, comprising transmitter means for transmitting optical signals, and receiver means for receiving optical signals that are reflected by objects in a target space, optical systems (10, 13, 27, 28) being pre-poned both the transmitter means and the receiver means, comprising further scanning means for deviating the optical axes of said transmitter means and said receiver means, preferably into two orthogonal directions, wherein the deviation angle (α, ϕ) between two successive distance measurements is adjustable, is determined by assigned angle decoders and is optionally larger than the divergence angle of the beam of the transmitted rays, furthermore comprising evaluation means (3) which determine distance values from the time-of-flight or from the phase relationship of the transmitted optical signals, a spatial angle (α, ϕ), determined by said angle decoder, being assigned to each distance value, **characterised in that** at least the optical system (10) of said transmitter means (9) comprises means (27) for altering the divergence of beam, preferably for magnifying by at least a factor of 5, for example by the factor of 10 to 20, which are controllable by said evaluation means (3) for recording with a normal beam divergence (20) and such ones of an enlarged beam divergence (22).

8. Device according to claim 7, **characterised in that** for delimiting the dynamics of the received signals, means are provided for reducing the transmitter power or the power of the received signals, preferably by inserting an optical damping member, for example a grey filter (28), into the path of rays of said transmitter (9) or of said receiver (14),
and that preferably
the effect of the optical damping member (28) is continuously variable, the member consisting for example of a continuously variable aperture diaphragm and/or of a grey wedge etc., or that its effect is variable in steps, and it consists, for example, of a hole diaphragm and/or of graduated grey filters etc.

9. Device according to claim 7 or 8, **characterised in that** said transmitter means (9) is designed to transmit laser beams.

10. Device according to any of claims 7 to 9, **characterised in that**, in addition to the receiver channel (9, 14), at least one second co-linear receiver channel (13', 14') of a reduced sensitivity is provided so that the device comprises at least two receiver channels (9, 14; 13', 14') of different sensitivity.

## Revendications

1. Procédé de prise de vues d'un espace objet en utilisant un télémètre optoélectronique selon une méthode de durée de parcours de signal, comprenant un poste émetteur pour émettre des signaux optiques, et un poste récepteur pour recevoir des signaux optiques réfléchis par des objets, qui se trouvent dans l'espace de but, dans lequel des systèmes optiques sont intercalés non seulement au poste émetteur, mais encore au poste récepteur, de plus comprenant un dispositif de scanning pour dévier les axes optiques du poste émetteur et du poste récepteur, préférablement en deux directions, l'angle de déviation entre deux mesurages de distances successives étant ajustable et, le cas échéant, plus grand que l'angle de divergence de faisceau du faisceau optique émis, en outre comprenant un dispositif d'évaluation, qui détermine des valeurs de distance à partir de la durée de parcours ou de la relation des phases du signal optique émis, un angle spatial étant associé à chaque valeur de distance, dans lequel des repères de référence sont disposés dans l'espace objet, qui ont ou des coordonnées géographiques définies, ainsi étant capables d'insérer les prises de vues dans un tel système de coordonnées, ou bien, en cas de plusieurs prises de vues à partir de directions différentes, qui sont capables de supporter l'assemblage de ces prises de vues,
**caractérisé en ce, qu'**
avant ou en suite des prises vues en utilisant une divergence normale de faisceau (20), on effectue des prises des vues en utilisant une divergence de faisceau tellement augmentée (22), que celle-ci correspond à l'angle de déviation entre deux mesurages de distances successives choisi pour la prise de vue, on détermine les coordonnées des repères de référence à partir de cette prise de vue d'une divergence de faisceau augmentée, et on utilise en suite les coordonnées pour les prises de vues avec une divergence normale de faisceau.

2. Procédé selon la revendication 1, **caractérisé en ce, que** pour ajuster la divergence de faisceau du poste émetteur (9) et, le cas échéant, du post récepteur aussi, on varie la distance focale et/ou on focalise les systèmes optiques (10 ou 13), qui sont intercalés à eux.

3. Procédé selon la revendication 1 ou 2, **caractérisé en ce**, **qu**'après la prise de vue avec une divergence augmentée de faisceau dans ces zones, où on a déterminé des repères de référence (6), on effectue des prises de vues des détails avec une divergence normale de faisceau (20), dans lequel le système optique (10) intercalé devant le poste émetteur (9), en utilisant le valeur de distance du repère de référence (6), connu à partir du mesurage avec une divergence augmentée de faisceau, est focalisé à ceci, le balayage étant réalisé avec une résolution tellement augmentée, que l'angle de déviation entre deux mesurages successifs de distance est environ égal ou plus petit que l'angle de divergence de faisceau, de manière que l'on peut déterminer avec une haute précision les coordonnées des repères de référence (6) à partir de ces prises de vues des détails (figure 3).

4. Procédé selon une quelconque des revendications 1 à 3, dans lequel on utilise des rétroréflecteurs comme des repères de référence, **caractérisé en ce, que** pour délimiter le contraste des signaux de réception lors des prises de vue pour déterminer la position des repères de référence (6), on réduit la puissance du poste émetteur ou les signaux de réception.

5. Procédé selon une quelconque des revendications précédentes, **caractérisé en ce, qu**'au moins une des caractéristiques suivantes est réalisée:
a) le poste émetteur est construit à émettre des rayons laser;
b) on utilise des rétroréflecteurs comme des repères de référence;
c) l'assemblage des prises de vues est réalisé pour produire un modèle à trois dimensions;
d) on introduit des éléments optiques, de préférence des système à lentilles (27), dans la marche des rayons (15) du poste émetteur (9) et, le cas échéant, du récepteur (14), qui augmentent l'angle de divergence de faisceau, par exemple par un facteur de 10 à 20;
e) la détermination des coordonnées des repères de référence (6) est effectuée en réalisant une moyenne pondérée;
f) la réduction de la puissance du poste émetteur est effectuée par l'introduction d'un élément d'atténuation, par exemple d'un filtre gris (28), dans la marche des rayons du poste émetteur (9) ou du poste récepteur (14), l'effet des éléments d'atténuation étant de préférence continuellement variable et ils sont, par exemple, constitués par des diaphragmes d'ouverture continuellement variables et/ou par des coins neutres etc., ou que leur effet est variable en gradins et ils consistent, par exemple, des sténopés et/ou des coins à échelons etc., et que ces moyens d'atténuation, après un premier mesurage, sont variés de sorte, que le canal de réception est opéré dans la domaine optimale de contraste.

6. Procédé selon une quelconque des revendications précédentes, dans lequel on utilise des rétroréflecteurs comme des repères de référence, **caractérisé en ce**, **qu**'un deuxième ou des autres canaux colinéaires de réception (13', 14') d'une sensitivité réduite sont prévus, et lors d'un mesurage des repères de référence rétroréflecteurs (6) on utilise un des canaux insensitifs de réception pour mesurer la distance.

7. Dispositif pour la réalisation du procédé selon une quelconque des revendications précédentes, comprenant un poste émetteur pour émettre des signaux optiques, et un poste récepteur pour recevoir des signaux optiques réfléchis par des objets, qui se trouvent dans l'espace de but, dans lequel des systèmes optiques (10, 13, 27, 28) sont intercalés non seulement au poste émetteur, mais encore au poste récepteur, de plus comprenant un dispositif de scanning pour dévier les axes optiques du poste émetteur et du poste récepteur, préférablement en deux directions, l'angle de déviation (α, ϕ) entre deux mesurages de distances successives étant ajustable, déterminé par des décodeurs d'angle et, le cas échéant, plus grand que l'angle de divergence de faisceau du faisceau optique émis, en outre comprenant un dispositif d'évaluation (3), qui détermine des valeurs de distance à partir de la durée de parcours ou de la relation des phases du signal optique émis, un angle spatial (α, ϕ), déterminé par le décodeur d'angle, étant associé à chaque valeur de distance, **caractérisé en ce, qu'**au moins le système optique du poste émetteur (9) comprend un dispositif (27) pour varier la divergence de faisceau, préférablement pour agrandir par au moins un facteur de 5, par exemple par un facteur de 10 à 20, qui peut être commandé par le dispositif d'évaluation (3) pour des prises de vues d'une divergence normale de faisceau (20) et des prises de vues d'une divergence augmentée de faisceau (22).

8. Dispositif selon la revendication 7, **caractérisé en ce, que** pour délimiter le contraste des signaux de réception, un dispositif pour la réduction de la puissance de l'émetteur ou de la puissance des signaux de réception est prévu, de préférence par l'introduction d'un élément d'atténuation, par exemple d'un coin neutre (28), dans la marche des rayons du poste émetteur (9) ou du poste récepteur (14),
et que de préférence
l'effet de l'élément d'atténuation (28) est continuellement variable et il consiste par exemple d'une diaphragme d'ouverture continuellement réglable et/ou d'un coin neutre etc., ou que son effet est variable en gradins et il consiste d'une diaphragme à trous et/ou des coins neutres en gradins etc.

9. Dispositif selon la revendication 7 ou 8, **caractérisé en ce, que** le poste émetteur (9) est construit pour émettre des rayons laser.

10. Dispositif selon une quelconque des revendications 7 à 9, **caractérisé en ce, que** l'on prévoit, additionnellement au canal de réception (9, 14), de plus au moins un deuxième canal de réception (13', 14') colinéaire d'une sensitivité réduite de manière, que le dispositif comprend au moins deux canaux de réception (9, 14 ; 13', 14') des sensitivités différentes.
